**Europäisches Patentamt**

**European Patent Office**

**Office européen des brevets**

(19)

(11) Numéro de publication: **0 133 075**
**B1**

(12) # FASCICULE DE BREVET EUROPÉEN

(45) Date de publication du fascicule du brevet:
02.09.87

(51) Int. Cl.⁴: **F 02 M 31/06**

(21) Numéro de dépôt: **84401371.4**

(22) Date de dépôt: **27.06.84**

(54) Col d'entrée d'air pour filtre à air de moteur à combustion interne.

(30) Priorité: **08.07.83 FR 8311441**

(43) Date de publication de la demande:
**13.02.85 Bulletin 85/7**

(45) Mention de la délivrance du brevet:
**02.09.87 Bulletin 87/36**

(84) Etats contractants désignés:
**DE GB IT SE**

(56) Documents cité:
**FR-A-1 291 724**
**FR-A-2 508 105**
**GB-A-2 071 205**

(73) Titulaire: **ACIERS ET OUTILLAGE PEUGEOT**
**Société dite:, F-25400 Audincourt (Doubs) (FR)**

(72) Inventeur: **Briche, Paul, 305 Rue Racine, F-59200**
**Tourcoing (FR)**

(74) Mandataire: **Bressand, Georges, c/o CABINET**
**LAVOIX 2 Place d'Estienne d'Orves, F-75441**
**Paris Cedex 09 (FR)**

EP 0 133 075 B1

## Description

La présente invention est relitive aux dispositifs d'alimentation en air des moteurs à combustion interne. Plus précisément, l'invention porte sur un col d'entrée pour le filtre à air d'un tel moteur du type comportant un corps en deux demi-coquilles qui délimitent une chambre de mélange dans laquelle débouchent un conduit d'air froid et un conduit d'air chaud et qui communiquent avec un conduit de sortie pour l'air mixte mélangé dans ladite chambre de mélange, la conduit d'air chaud étant séparé de la chambre de mélange par un volet à réglage thermostatique qui, par l'intermédiaire d'une tringlerie est commandé par un capteur thermométrique solidaire du corps et prévu dans une position dans laquelle il est balayé par l'air mixte.

Dans un col d'entrée connu de ce genre, la tringlerie qui est interposé entre le volet et le capteur thermométrique comprend un levier monté à rotation dans le corps et couplant la sortie du capteur au volet par l'intermédiaire d'une tige de poussée. La capteur thermométrique est alors placé dans la paroi latérale du corps qui délimite le conduit de sortie du col.

Ce montage a plusieurs inconvénients.

Tout d'abord le montage de la tringlerie pose des problèmes et ne se prête pas à être exécuté automatiquement, car le levier est monté à rotation autour d une goupille qui s'étend généralement perpendiculairement au plan de joint des deux demi-coquilles du corps. Par ailleurs. en raison du fait que le capteur thermométrique doit constamment être sollicité élastiquement dans un sens donné la tringlerie doit comporter un élément de réglage et dans le dispositif antérieur ce régage est assure par une vis qui arès montage de la tringlerie et du corps du col doit être ajustée manuellement. Outre, le fait que ce montage est relativement complexe et entraine un coût élevé ce reglage interdit naturellement un assemblage automatique du col.

FR-A-2 508 105 décrit un col d'entrée d'air pour filtre à air d'un moteur à combustion interne comportant un corps en deux demi-coquilles qui délimitent une chambre de mélange dans laquelle débouchent un conduit d'air froid, un conduit d'air chaud et un conduit de sortie pour l'air mixte mélangé dans ladite chambre de mélange; le conduit d'air chaud est séparé de la chambre de mélange par un volet à réglagé thermostatique qui, par l'intermédiaire d'une tringlerie est commandé par un capteur thermométrique solidaire du corps et prévu dans une position dans laquelle il est balayé par l'air mixte. La tringlerie est composée d'éléments de transmission montés exclusivement dans le corps.

L'invention a pour objet un col d'entrée d'air pour filtre à air d'un moteur à combustion interne comportant un corps en deux demi-coquilles qui délimitent une chambre de mélange dans laquelle débouchent un conduit d'air froid et un conduit d'air chaud et qui communiquent avec un conduit de sortie pour l'air mixte mélangé dans ladite chambre de mélange, le conduit d'air chaud étant séparé de la chambre de mélange par un volet à réglage thermostatique qui, par l'intermédiaire d'une tringlerie composée d'éléments de transmission montés exclusivement en translation dans le corps, est commandé par un capteur thermométrique solidaire du corps et prévu dans une position dans laquelle il est balayé par l'air mixte, caractérisé en ce que ladite tringlerie comporte une première tige de transmission en contact avec un élément mobile du capteur thermométrique, une seconde tige en contact avec une patte d'actionnement dudit volet, et un renvoi d'angle formé par des éléments disposés dans un canal ménagé dans ledit corps dans le plan de joint des demi-coquilles et admettant une transmission de force avec modification de la direction de cette force.

Cette caractéristique entraine l'avantage que la tringlerie peut être montée facilement automatiquement dans l'une des demi-coquilles par simple pose, aucun élément monté à rotation n'étant prévu. En particulier, cette tringlerie ne nécessite aucune goupille montée perpendiculairement par rapport au plan de joint des demi-coquilles. En outre, un réglage de la tringlerie devient superflu.

L'invention sera mieux comprise à l'aide de la description qui va suivre, donnée uniquement à titre d'exemple et faite en se référant aux dessins annexes, sur lesquels:

- la Fig. 1 est une vue en coupe par le plan de joint des demi-coquilles du corps du col d'entrée, montrant en particulier la disposition de la tringlerie et du capteur thermométrique;
- la Fig. 2 est une vue extérieure du col;
- les Fig. 3, 4 et 5 sont des vues en coupe prises respectivement selon les lignes 3-3, 4-4 et 5-5 de la Fig. 1;
- la Fig. 6 est une vue de détail à plus grande échelle montrant une variante du renvoi d'angle utilisable dans le col d'entrée suivant l'invention:
- la Fig. 7 est une vue analogue à celle de la Fig. 6, mais montrant une autre variante du renvoi d'angle.

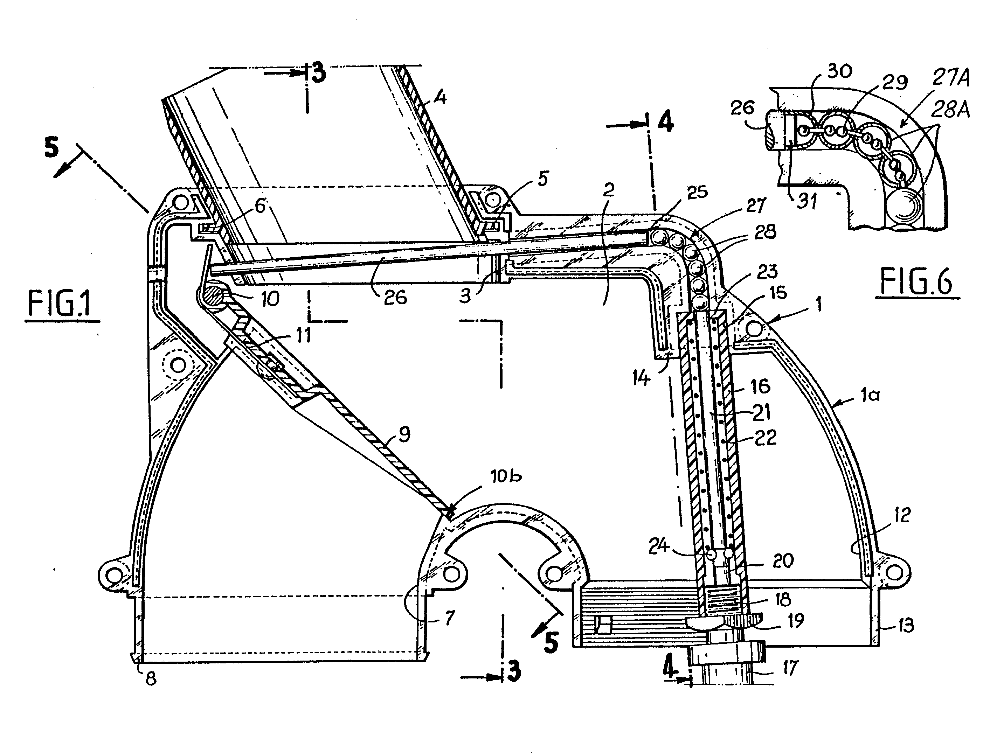

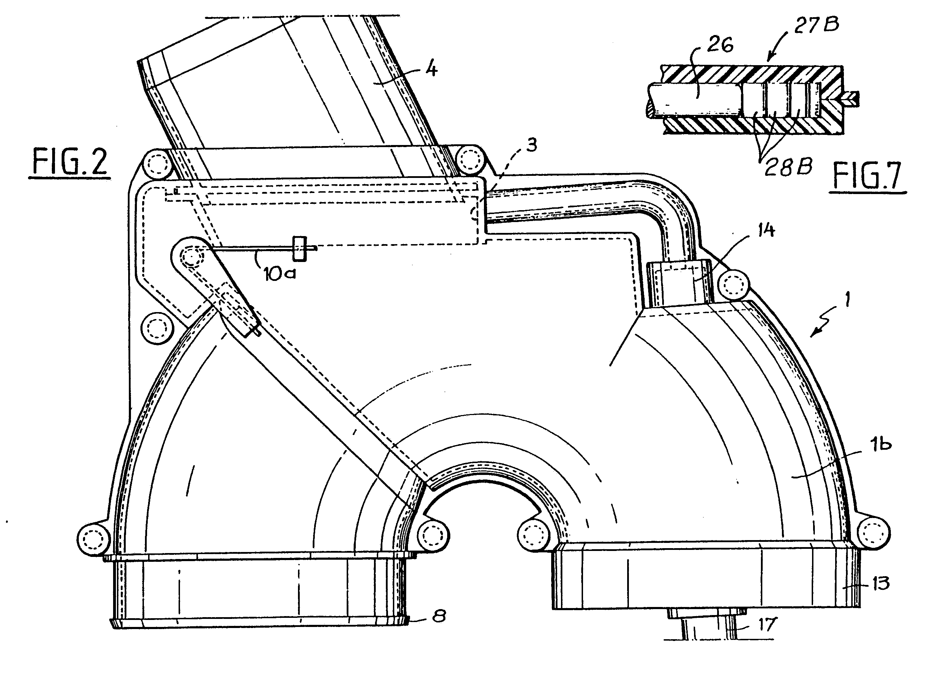

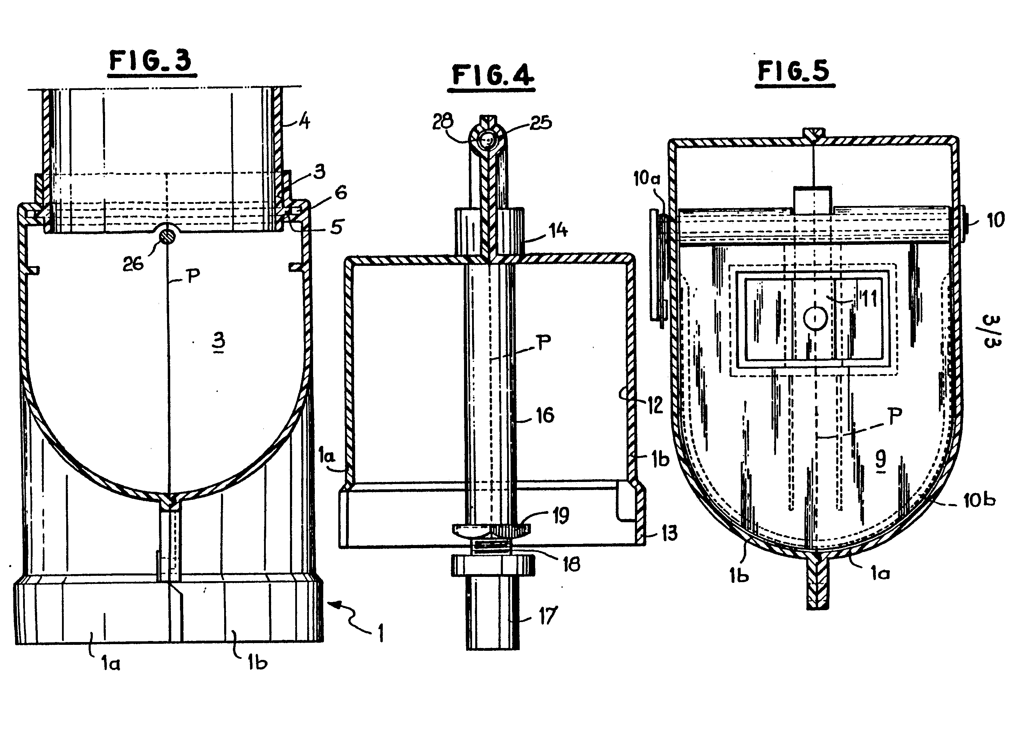

Conformément au mode de réalisetion représenté aux Fig. 1 à 5, le col d'entrée suivent l'invention comprend un corps 1 composé de deux demi-coquilles 1a et 1b qui sont réunies dans un plan de joint P (Fig. 3 à 5). Les demi-coquilles 1a et 1b sont réalisées de préférence en une matière plastique moulée et peuvent avantageusement être de forme identique. Le corps 1 qui présente à peu près la forme d'un croissant délimite une chambre de melange 2 dans laquelle debouche un premier conduit d'entrée 3 avec lequel communique une tubulure de raccordement (qui est fixée dans le corps grâce à une bride 5 s'engageant dans une rainure annulaire 6 pratiquée dans la paroi latérale du conduit d'éntrée 3.

Un second conduit d'entrée 7 d'air chaud débouche également dans la chambre de mélange et comporte à son extrémité extérieure une collerette de raccordement 8 sur laquelle peut être branchée une tubulure (non représentée) pour l'alimentation en air chaud du col d'entrée. Le conduit d'entrée d'air chaud 7 est séparé de la chambre de mélange par un volet 9 de réglage thermostatique qui est monté oscillant autour d'une broche d'oscillation 10 reçue dans le corps 1 et dont l'axe s'étend perpendiculairement au plan de joint P des demi-coquilles 1a et 1b

Ce volet est sollicité dans sa position de fermeture par un ressort 10a prevu à l'extérieur du corps 1 et s appuie sur un siege 10b ménagé dans ce corps dans la zone de transition entre l'entrée 7 et la chambre de mélange 2.

Le volet 9 est muni d'une patte d'actionnement 11 s'étendant dans un sens opposé par rapport au volet 9 à partir de la broche d'oscillation 10.

La chambre de mélange 2 communique également avec un conduit de sortie 12 pour l'air mixte qui y est mélangé. Ce conduit de sortie se termine par un raccord annulaire 13 qui est destiné à être monté sur l'entrée d'un filtre à air pour l'alimentation en air régulé de celui-ci. Ce filtre n'a pas été représente sur le dessin.

On notera que le conduit d'entrée d'air débouche dans la chambre de mélange 2 à peu près au sommet du croissant forme par le corps 1 et que le volet 9 s'étend à peu près parallèlement à la direction d'écoulement de l'air froid pénétrant dans la chambre de mélange. Cette disposition présente l'avantage de n'opposer qu'une très faible résistance au courant d'air principal circulant dans le col d'entrée.

Un organe de support 14 eat ménagé dans le corps 1 en regard de l'axe du conduit de sortie 12. Ce support présente une cavité cylindrique 15 dans laquelle est reçu un tube cylindrique 16 rendu solidaire du corps par emmanchement à force ou par collage, par exemple.

Ce tube cylindrique s'étend en porte-à-faux vers le conduit de sortie 12 et porte à son extrémité libre un capteur thermométrique 17 qui y est fixé grâce à un filetage 18 tout en étant associé à un contre-écrou de serrage 19.

Le capteur présente un poussoir de sortie 20 (Fig. 1) qui est en contact avec une première tige de transmission 21 logée coaxialement dans le tube 16 et entouré d'un ressort de compression 22 qui prend appui d'une part sur une collerette 23 ménagée à l'extrémité du tube 16 engagé dans la cavite 15, et d'autre part sur un épaulement 24 disposé autour de la tige de poussée 21 du côté du capteur thermométrique 17. Cet épaulement peut être constitué par un jonc comme représenté sur la Fig. 1 ou bien par un matriçage de l'extrémité de la tige 21.

Chaque demi-coquille 1a et 1b présente une rainure courbe 25, les deux rainures formant après assemblage des demi-coquilles un canal de section circulaire prolongeant la cavite 15 et destiné à recevoir l'une des éxtremités d'une seconde tige de transmission 26 et un renvoi d'angle 27 qui présente un angle d'environ 90°.

L'extrémité opposée de la tige de transmission 26 est en contact direct avec la patte d'actionnement 11 du volet 9.

Le renvoi d'angle 27 peut être constitué par un jeu de billes 28 comme représenté sur les Figures ou par tout autre disposition analogue. Deux variantes de ce renvoi d'angle seront decrites ci-après à propos des Fig. 6 et 7.

Le capteur thermométrique 17 qui est placé dans le conduit de sortie du col d'entrée est balayé par l'air sortant de la chambre de mélange 2. En étant placé dans l'axe du conduit de sortie 12, ce capteur reflète fidèlement la température de l'air à cet endroit et son poussoir 20 réagit donc exactement en fonction de la température de cet air. Le poussoir 20 étant en contact direct avec la tringlerie formée par les tiges 21 et 26 et par le renvoi d'angle 27 les mouvements de ce poussoir sont répercutés directement sur la patte d'actionnement 11 du volet 9 ce dernier réagissant donc immédiatement aux variations de température de l'air sortant du col. Par exemple lorsque de l'air froid entre dans la chambre de mélange 2, le capteur thermométrique repousse son poussoir vers l'extérieur, de sorte que les tiges 21 et 26 effectuent un mouvement de translation qui tend à ouvrir le volet 9.

On sait qu'un capteur thermométrique du type utilisé dans les cols d'entrée dont il est question ici nécessite une sollicitation élastique permanente dans un sens tendant à rappeler son poussoir vers l'intérieur.

Dans la disposition suivant l'invention ceci est assuré convenablement par le ressort 22 qui s'appuie directement sur l'épaulement 24 de la tige 21.

Le ressort 22 pouvant être calculé exactement en fonction de la nature du capteur thermométrique 17 et de la longueur du tube 16, on peut faire en sorte qu'aucun réglage n'est nécessaire au cours du montage du col d'entrée ce qui supprime donc une opération manuelle pendant la fabrication. Un réglage est cependant possible en vissant plus au moins le capteur 17 dans le tube 16 et en le bloquant par le contre-écrou 19.

On notera également que du fait de la présence du renvoi d'angle 27 dans la tringlerie reliant le volet au capteur on peut utiliser la disposition suivant l'invention dans des cols d'entrée dont la configuration n'est pas celle représentée aux Figures. Ceci constitue un avantage considérable compte tenu du fait qu'un col d'entrée d'air d'un carburateur peut avoir des formes très diverses en fonction de l'implantation de l'ensemble moteur dans un véhicule automobile, la disposition suivant l'invention étant universelle en ce qui concerne la transmission de l'effort du capteur au volet de réglage. En outre, on notera que tous les éléments mécaniques de l'ensemble sont disposés dans le plan de joint P des demi-coquilles 1a et 1b ce qui en facilite considérablement le montage.

La Fig 6, représente une variante de l'invention à plus grande échelle que les Fig 1 à 5. Dans ce cas, il s'agit d'un renvoi d'angle 27A dont les éléments sont formés par des sphéres 28A en tôle emboutie réunies entre elles par des biellettes de liaison 29 à la façon des chaînes utilisées dans les appareils sanitaires pour relier le bouchon de l'évacuation à l'appareil. Les éléments terminaux 30 de ce renvoi d'angle se terminent par une portion cylindrique annulaire pour s'adapter sur une portion rétrécie 31 des tiges 21 et 26, respectivement. Ainsi, lors de l'assemblage, ces tiges ainsi que le renvoi d'angle ne forment qu'une seule unité, ce qui facilite notablement la mise en place à tel point que l'assemblage peut être entièrement automatique. D'une façon générale, les éléments du renvoi d'angle sont avantageusement solidaires les une des autres dans ce même but, ce qui peut être réalisé par d'autres moyens que ceux décrits ci-dessus.

Par exemple, la Fig. 7 montre une autre variante dans laquelle les éléments du renvoi d'angle 27B sont des petits galets cylindriques 28B. Ceux-ci peuvent être rendus solidaires les une des autres par une sorte de chaîne à rouleaux classique. Dans ces cas, le canal délimité par les rainures 25 est de section rectangulaire.

**Revendications**

1. Col d'entrée d'air pour filtre à air d'un moteur a combustion interne comportant un corps (1) en deux demi-coquilles (1a, 1b) qui délimitent une chambre de mélange (2) dans laquelle débouchent un conduit d'air froid (3) et un conduit d'air chaud 7 et qui communiquent avec un conduit de sortie (12) pour l'air mixte mélangé dans ladite chambre de mélange (2), le conduit d'air chaud (7) étant séparé de la chambre de mélange (2) par un volet (9) à réglage thermostatique qui, par l'intermédiaire d'une tringlerie (21, 26, 27) composée d'éléments de transmission montés exclusivement en translation dans le corps (1), est commandé par un capteur thermométrique (17) solidaire du corps (1) et prévu dans une position dans laquelle il est balayé par l'air mixte, caractérisé en ce que ladite tringlerie comporte une première tige de transmission (21) en contact avec un élément mobile (20) du capteur thermométrique (17), une seconde tige (26) en contact avec une patte d'actionnement (11) dudit volet (9), et un renvoi d'angle (27; 27A; 27B) forme par des éléments (28; 28A; 28B) disposés dans un canal (25) ménagé dans ledit corps (1) dans le plan de joint (P) des demi-coquilles (1a, 1b) et admettant une transmission de force avec modification de la direction de cette force.

2. Col d'entrée suivant la revendication 1, caractérisé en ce que lesdits éléments sont des billes (28).

3. Col d'entrée suivant la revendication 1, caractérisé en ce que lesdits éléments sont des galets cylindriques (28B).

4. Col d'entrée suivant l'une quelconque des revendications 1 à 3, caractérisé en ce que les éléments (28A) du renvoi d'angle (27A) sont connectés les uns aux autres.

5. Col d'entrée suivant la revendication 4, caractérisé en ce que les éléments (28A) du renvoi d'angle (27A) sont formés par des sphéres en tôle emboutie reliées les unes aux autres par des biellettes de connexion (29), les éléments d'extrémité (30) du renvoi d'angle étant connectés auxdites tiges (21, 26).

6. Col d'entrée suivant l'une quelconque des revendications 1 à 5, caractérisé en ce que ladite première tige (21) est logée dans un tube rigide de support (16) fixé en porte-à-faux dans le corps et coaxial à la tige, ce tube s'étendant dans le conduit de sortie à peu près le long de son axe et portant à son extrémité libre ledit capteur thermométrique (17).

7. Col d'entrée suivant la revendication 6, caractérisé en ce qu'un ressort (22) est logé dans le tube de support (16) pour exercer sur l'élément mobile (20) du capteur une force élastique par l'intermédiaire de ladite première tige (21).

8. Col d'entrée suivant l'une quelconque des revendications 1 à 7, caractérisé en ce que ledit corps (1) présente à peu près la forme d'un croissant dont les extrémités sont conformées de manière à former ledit conduit d'entrée d'air chaud (7) et ledit conduit de sortie d'air mixte (12), en ce que ledit conduit d'air froid débouche dans le corps à peu près au sommet de l'arrondi du corps (1), en ce que ledit volet s'étend à peu prés parallèlement à la direction générale d'écoulement de l'air froid pénétrant dans ladite chambre de mélange, et en ce que le renvoi d'angle présente un angle d'environ 90°.

**Patentansprüche**

1. Lufteinlaßstutzen für Luftfilter einer Brennkraftmaschine, mit einem Gehäuse (1) aus zwei Halbschalen (1a, 1b) zur Abgrenzung einer Mischkammer (2), in welche ein Kaltluftrohr (3) und ein Warmluftrohr (7) münden, die mit einem Ausgangsrohr (12) für die in der Mischkammer (2) erzeugte Mischluft verbunden sind, wobei das Warmluftrohr (7) von der Mischkammer (2) durch eine Verschlußkappe (9) zur thermostatischen Regelung getrennt ist, welche mittels eines Gestänges (21, 26, 27) aus in dem Gehäuse angeordneten Übertragungselementen durch einen mit dem Gehäuse (1) fest verbundenen thermometrischen Meßfühler geregelt wird und in einer Stellung vorgesehen ist, in welcher sie durch die Mischluft freigehalten wird, dadurch gekennzeichnet, daß das Gestänge eine mit einem beweglichen Element (20) des thermometrischen Meßfühlers (17) in Berührung stehende erste Übertragungsstange (21) aufweist, sowie eine mit einem Betätigungselement (11) der Verschlußklappe (9) in Berührung stehende zweite Stange (26) und ein aus Elementen (28; 28A; 28B) gebildetes Winkelgetriebe (27; 27A; 27B), wobei die Elemente (28; 28A; 28B) in einem in dem Gehäuse (1) in der Verbindungsebene (P) der zwei Halbschalen (1a, 1b) ausgesparten Kanal (25) angeordnet sind und eine Kraftübertragung mit einer Richtungsänderung der Kraft ermöglichen.

2. Einlaßstutzen nach Anspruch 1, dadurch gekennzeichnet, daß die Elemente kleine Kugeln (28) sind.

3. Einlaßstutzen nach Anspruch 1, dadurch gekennzeichnet, daß die Elemente zylindrische Rollkörper (28B) sind.

4. Einlaßstutzen nach einem der Ansprüche 1 bis 3, dadurch gekennzeichnet, daß die Elemente (28A) des Winkelgetriebes (27A) untereinander verbunden sind.

5. Einlaßstutzen nach Anspruch 4, dadurch gekennzeichnet, daß die Elemente (28A) des Winkelgetriebes (27A) untereinander durch Verbindungsarme (29) verbundene Blechkugeln sind, wobei die Randelemente (30) des Winkelgetriebes mit den Stangen (21, 26) verbunden sind.

6. Einlaßstutzen nach einem der Ansprüche 1 bis 5, dadurch gekennzeichnet, daß die erste Stange (21) in einem starren Stützrohr (16) gelagert ist, welches sich in dem Ausgangsrohr in etwa entlang dessen Achse erstreckt und an seinem freien Ende den thermometrischen Meßfühler (17) aufweist, wobei das Stützrohr (16) in dem Gehäuse auskragend und koaxial zu der ersten Stange (21) angeordnet ist.

7. Einlaßstutzen nach Anspruch 6, dadurch gekennzeichnet, daß eine Feder (22) in dem Stützrohr (16) gelagert ist zur Ausübung einer elastischen Kraft auf das bewegliche Element (20) des Meßfühlers mittels der ersten Stange (21).

8. Einlaßstutzen nach einem der Ansprüche 1 bis 7, dadurch gekennzeichnet, daß das Gehäuse (1) in etwa die Form einer Sichel aufweist, deren Enden der Form des Warmlufteingangsrohres (7) und des Mischluftausgangsrohres (12) entsprechen, das Kaltluftrohr in dem Gehäuse in etwa an dem Scheitel der Rundung des Gehäuses (1) mündet, die Verschlußklappe sich in etwa parallel zu der allgemeinen Strömungsrichtung der die Mischkammer durchströmende Kaltluft erstreckt, und das Winkelgetriebe einen Winkel von circa 90° aufweist.

**Claims**

1. An air intake neck for an air filter of an internal combustion engine comprising a body (1) in two semi-shells (1a, 1b) which define a mixing chamber (2) onto which open a cold air conduit (3) and a hot air conduit (7) and which communicate with an outlet conduit (12) for the mixed air mixed in said mixing chamber (2), the hot air conduit (7) being separated from the mixing chamber (2) by a thermostatically adjusted flap (9) which is controlled through a linkage (21, 26, 27) composed of transmission elements exclusively mounted in translation in the body (1) by a thermometric sensor (17) connected to the body (11) and provided in a position in which said mixed air flows thereover, characterised in that the linkage comprises a first transmission rod (21) in contact with a movable element (20) of the thermometric sensor (17), a second rod (26) in contact with an actuating tab (11) of said flap (9) and a motion direction changing means (27, 27A, 27B) formed by elements (28, 28A, 28B) disposed in a passageway (25) formed in said body (1) in the joint plane (P) of the semi-shells (1a, 1b) and allowing a transmission of force with a modification of the direction of this force.

2. An intake neck according to claim 1, characterized in that said elements are balls (28).

3. An intake neck according to claim 1, characterized in that said elements are cylindrical rollers (28B).

4. An intake neck according to any one of the claims 1 to 3, characterized in that the elements (28A) of the motion direction changing means (27A) are connected to one another.

5. An intake according to claim 4, characterized in that the elements (28A) of the motion direction changing means (27A) are formed by spheres of press-formed sheet metal which are interconnected by connecting links (29), the end elements (30) of the motion direction changing means being connected to said rods (21, 26).

6. An intake neck according to any one of the claims 1 to 5, characterized in that said first rod (21) is disposed in a rigid support tube (16) which is fixed in a cantilever manner in the body and is coaxial with the rod, this tube extending in the outlet conduit roughly along its axis and carrying said thermometric sensor (17) at its free end.

7. An intake neck according to claim 6, characterized in that a spring (22) is disposed in the support tube (16) for exerting on the movable element (20) of the sensor an elastic force through said first rod (21).

8. An intake neck according to any one of the claims 1 to 7, characterized in that said body (1) has substantially the shape of a crescent whose ends are shaped in such manner as to form said hot air intake conduit (7) and said mixed air outlet conduit (12), said cold air conduit opening into the body roughly at the apex of the round part of the body (1), said flap extending roughly in a direction parallel to the general direction of flow of the cold air entering said mixing chamber, and said motion direction changing means effecting a change in direction at an angle of about 90°.

FIG.1

FIG.6

5

3

4

5

6

2

25

27

28

23

15

1

10

26

3

14

16

21

22

1a

11

9

12

10b

24

20

7

18

19

13

8

5

3

4

17

26

30

29

27A

28A

31

0 133 075

FIG.2

FIG.7

26  27B

28B

4

3

10a

14

1

1b

8

13

17

0133075

**FIG.3**

**FIG.4**

**FIG.5**

0133075

3/3